Europäisches Patentamt

(19) European Patent Office    (11) Publication number: **0 112 943**
Office européen des brevets    **B1**

(12)    EUROPEAN PATENT SPECIFICATION

(45) Date of publication of patent specification: **12.08.87**    (51) Int. Cl.⁴: **H 04 L 9/02,** G 07 F 7/10

(21) Application number: **82306988.5**

(22) Date of filing: **30.12.82**

(54) **Data communication network.**

(43) Date of publication of application:
**11.07.84 Bulletin 84/28**

(45) Publication of the grant of the patent:
**12.08.87 Bulletin 87/33**

(84) Designated Contracting States:
**DE FR GB**

(56) References cited:
**EP-A-0 048 903
EP-A-0 063 794
GB-A-2 047 506**

**PROCEEDINGS COMPUTER
COMMUNICATIONS NETWORKS, Conference
5th-8th September 1978, pages 351-354, IEEE,
New York, USA M. SENDROW: "Key
management in EFT networks"**

(73) Proprietor: **International Business Machines
Corporation
Old Orchard Road
Armonk, N.Y. 10504 (US)**

(72) Inventor: **Holloway, Christopher
1 Thorverton Court Thorverton Road
Cricklewood London NW2 1RD (GB)**

(74) Representative: **Appleton, John Edward
IBM United Kingdom Limited Intellectual
Property Department Hursley Park
Winchester Hampshire SO21 2JN (GB)**

Courier Press, Leamington Spa, England.

## Description

This invention relates to data communication networks in which binary coded data is transmitted between locations through a message switching node including a data processor.

The invention finds particular application in an electronic funds transfer (EFT) network in which it is necessary to transmit sensitive data between many hundreds or thousands of locations and in which it is not practical to have either a common master encryption key or maintain records of many thousand encryption keys at each location.

Electronic Funds Transfer is the name given to a system of directly debiting and crediting customer and service suppliers' accounts at the instant of confirmation of a transaction. The accounts are held at a bank, or credit card company's central processing system, which is connected to a dedicated network of retailers or service suppliers' data processing equipment. In this way no cash or cheque processing is required for the transaction.

In a simple application each bank or credit card company has its own network and each customer of the bank has a credit card which can only be used on that network, such a network is described in European Patent Publication 32193.

European Patent Publication 32193 (IBM Corporation) describes a system in which each user and retailer has a key number—retailers key Kr and users key Kp—which is stored together with the users identity number and retailer's business number in a data store at the host central processing unit (c.p.u.). The retailer's key and the user key are used in the encryption of data sent between the retailer's transaction terminal and the host c.p.u. Obviously only users or customers with their identity numbers and encryption keys stored at the host c.p.u. can make use of the system. As the number of users expands there is an optimum number beyond which the time taken to look up corresponding keys and identity numbers unacceptable for on-line transaction processing.

European Patent Publication 18 129 (Motorola Inc.) describes a method of providing security of data on a communication path. Privacy and security of a dial-up data communications network are provided by means of either a user or terminal identification code together with a primary cipher key. A list of valid identification codes and primary cipher code pairs is maintained at the central processing unit. Identification code and cipher key pairs, sent to the c.p.u. are compared with the stored code pairs. A correct comparison is required before the c.p.u. will accept encoded data sent from the terminal. All data sent over the network is encrypted to prevent unauthorised access using the relevant user or terminal key.

UK Patent Application 2,020,513A (Atalla Technovations) describes a method and apparatus which avoids the need for transmitting user-identification information such as a personal identification number (PIN) in the clear from station to station in a network such as described in the two European Patent Publications mentioned above. The PIN is encoded using a randomly generated number at a user station and the encoded PIN and the random number are sent to the processing station. At the processing station a second PIN having generic application is encoded using the received random number and the received encoded PIN and the generic encoded PIN are compared to determine whether the received PIN is valid.

In such a system a generic PIN having an encoded value that will give a valid comparison with many users PINs will be such as to provide valid comparisons with randomly generated PINs and is unlikely to prevent fraudulent use.

UK Patent Application 2,047,506 (Atalla Technovations) describes an improvement on 2,020,513. Two stations A and B communicate through a central office which stores lists of valid PIN's available at each terminal. A message sent from A to B has to be received by a user having a valid B PIN and sent by a user having a valid A PIN. The encoded messages are decoded and then re-encoded at the Central Office and a message sequence number sent in the clear between all three nodes.

The EFT system made possible by the systems described in the above patent applications is limited to a single host c.p.u. holding the accounts of all users both retailers and customers.

It is desirable to construct a data communication network in which many debit card and credit card issuing concerns holding accounts are connected via their own central processing unit and in which terminals in retailers' outlets may be connected interactively to any one of the c.p.u's. In such a system a credit card holder should be able to use a single card at any retailers or service company's terminal and the system should have the ability to transfer funds between accounts maintained at different processing nodes at the network in a completely secure way. Such a system would have of the order of 100 host c.p.u. nodes connected to terminals numbered in 100's of thousands. Users—that is card holders—would be numbered in millions.

It is a requirement of an EFT system that a card holder (CH) is responsible for the security of the card and the personal identification number (PIN) that is issued separately. The CH must ensure that the card identification and the PIN are not available together to anyone else other than at the card issuing concern's host c.p.u. In an EFT network then the PIN data must always be encrypted and not be available in a decoded form at any node of the network, except at the receiving host c.p.u. and at entry at the transaction terminal.

While each host c.p.u. must maintain lists of its owner's issued cards and associated PINs it is impracticable for each host c.p.u. to maintain a list of all transaction terminal identification numbers because retailers' transaction terminals can be added or deleted from the network on a day-today basis. Consequently any encryption keys used in the network cannot be generally available to all nodes and terminals in the network.

An object of the present invention is to provide a data communication network in which sensitive data can be transmitted in a secure form from a terminal to a host processor without the host processor having to maintain a list of encryption keys relating to each terminal in the network.

According to the invention there is provided a data communication network in which binary coded data is transmitted between locations through a message routing node, including at each sending location:

means to generate an origin message key for each particular message initiated at that location, logic means to perform an exclusive OR operation on binary coded data to be transmitted and the origin message key and from the operation to generate a first coded message;

at each message routing node:

means to generate the origin message key and a destination message key for the particular message, logic means to perform, in such a way that the binary coded data do not appear in the clear, three-input exclusive OR operations on the origin message key, the destination message key and the first coded message to generate a second coded message for transmission to the receiving location;

at the receiving location:

means to generate the destination message key and logic means to perform an exclusive OR function on the destination transmission key and the received second coded message to regenerate the original binary coded data.

According to a second aspect of the invention there is provided a method of transmitting binary coded data between locations through a message routing node including the steps of at each location for each message to be transmitted:

first generating an origin message key for the particular message; secondly performing an exclusive OR function on the origin message key and the binary coded data to produce a first coded message;

at each message routing node for each received message:

first generating the origin message key; secondly generating a destination message key for the particular message; thirdly performing, in such a way that the binary coded data do not appear in the clear, an exclusive OR function on the origin message key, the destination message key and the received first coded message and thus producing a second coded message for transmission to the receiving location;

at each receiving location: first generating the destination message key; secondly performing an exclusive OR function on the destination message key and the second coded message to regenerate the original binary coded data.

In order that the invention may be fully understood a preferred embodiment thereof will now be described with reference to the accompanying drawings in which:

Figure 1 shows in schematic form a multi-location, multi-node EFT network;

Figure 2 shows in schematic form the components of transaction terminal;

Figure 3 shows in schematic form the components of a message switching node;

Figure 4 shows in schematic form the components of a host processing centre.

The operation of the preferred embodiment of the invention may be summarised by the following table.

ORIGIN LOCATION

---

ORIGIN MESSAGE KEY
  EX OR
DATA
GIVES
FIRST CODED MESSAGE


MESSAGE SWITCHING NODE

---

ORIGIN MESSAGE KEY
  EX OR
DESTINATION MESSAGE KEY
  EX OR
FIRST CODED MESSAGE
  GIVES
SECOND CODED MESSAGE

DESTINATION LOCATION

---

DESTINATION MESSAGE KEY
  EX OR
SECOND CODED MESSAGE
  GIVES
DATA


Referring now to the drawings the preferred embodiment will be described in more detail.

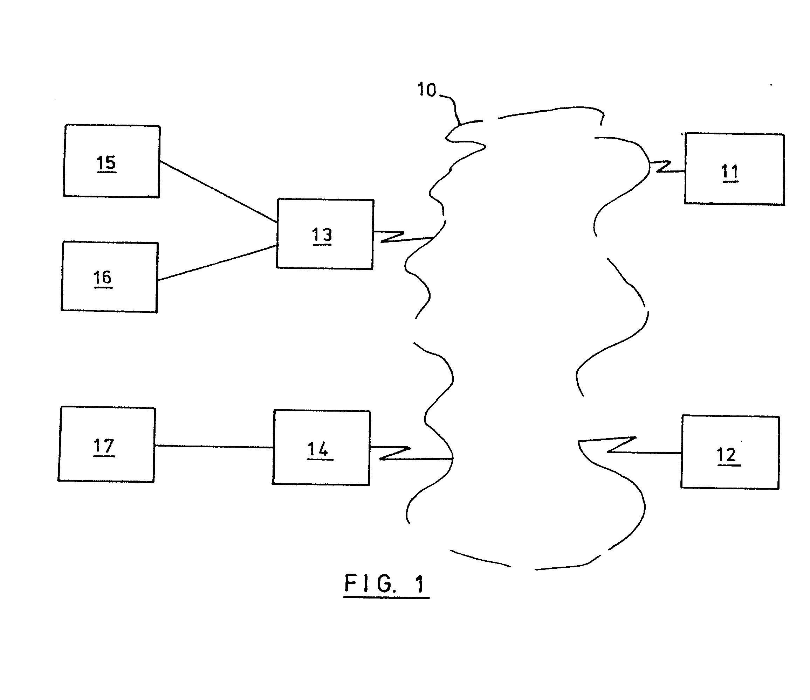

Fig. 1 shows a multi-location, multi-node EFT network in which a packet switching network 10 has host processors 11 and 12 connected and message switching nodes 13 and 14. A packet switching (PS) network is now a standard. network in which information packages are routed between origin and destination not necessarily using the same route for successive packages. Message switching nodes 11 and 12 are each associated with a PS exchange and may be IBM Series 1 processor connected through pack switching interface. Each node has a plurality of transaction terminals connected of which 15, 16 and 17 are shown as examples. The terminals may be connected through a direct line or each retail store may multiplex the connection of several terminals to a node.

In a typical network there may be up to 100 host processors and 1,000 nodes. Each node will support up to 100 transactions terminals giving 100,000 to 100 ratio of terminals to host processors. The processing power of the host processors and nodes is such that the cryptographic key management of messages between 100 hosts and 1,000 nodes is a practical operation. However for each node and host to manage the cryptographic keys for 100,000 terminals the volatility of which will be high is not a practical proposition.

By volatility is meant the rate of change of connection to the network. It is envisaged that after initial set up the connecton of host processors and switching nodes will be comparatively rare, however retail organisations are likely to want to connect and disconnect transaction terminals frequently. In a secured cryptographic system this would mean a constant changing of cryptographic keys at all locations of the network and the vulnerability of the terminals to fraudent access to keys gives rise to a serious security risk.

The present invention seeks to avoid the disadvantage of such a system by employing a technique that does not depend upon the use of network wide cryptographic keys and by limiting the need for keys to be known to only effectively adjacent locations and nodes. For the purposes of the preferred embodiment the packet switch network 10 is transparent to the connection between switching nodes and host processors.

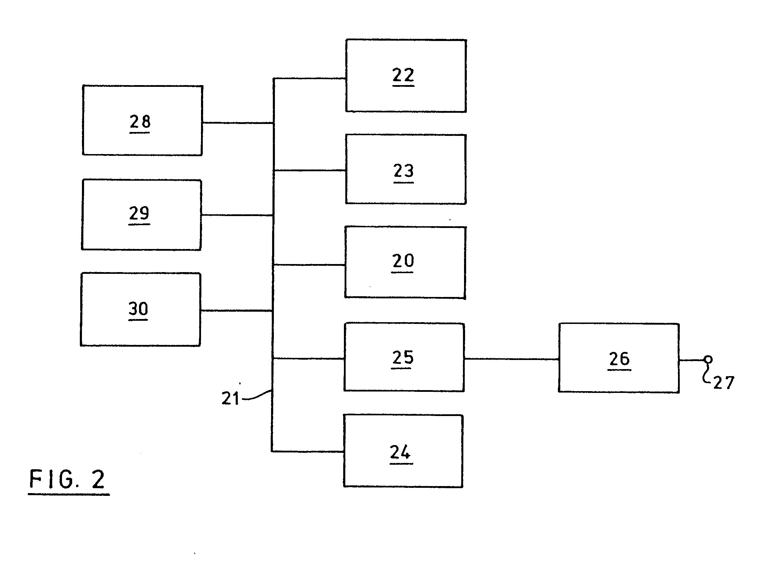

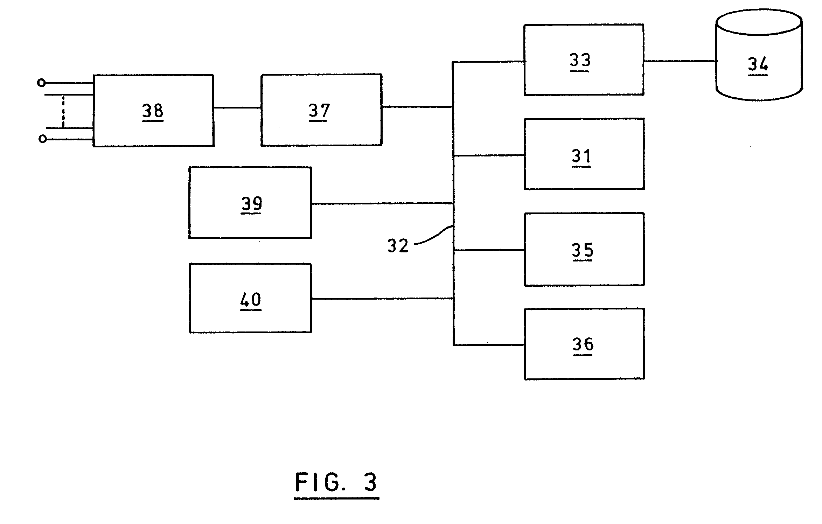

Fig. 2 shows the main components at a transaction terminal used in the preferred embodiment. The terminal contains a processor 20 connected by a common bus 21 to a random access store (RAM) 22 and a read only memory (ROM) 23. Also connected to the bus 21 is an encryption device 24 and a line adapter 25 which is connected to a modem 26. The modem 26 is connected by a direct line 27 to a switching node (Fig. 3). The user of the terminal sees a card reader 28, a keyboard 29 and a display unit 30 all of which are connected to the bus 21.

Fig. 3 shows the main components at the switching node used in the preferred embodiment. A processor 31 which may be an IBM Series 1 processor (IBM is a Registered Trade Mark) is connected by a common bus 32 to a working main store 33 which has connected to it a back-up disc storage device 34. A control unit 35 and encryption device 36 with its own working storage are also connected to the bus 32 as are a line adapter 37 and modem 38. A packet switching interface device 39 is also connected to the bus 32. The interface connects directly to a packet switching exchange. The modem 38 receives the direct lines from the modems 27 of the transaction terminals. A magnetic stripe writer 40 is also connected to the bus 32.

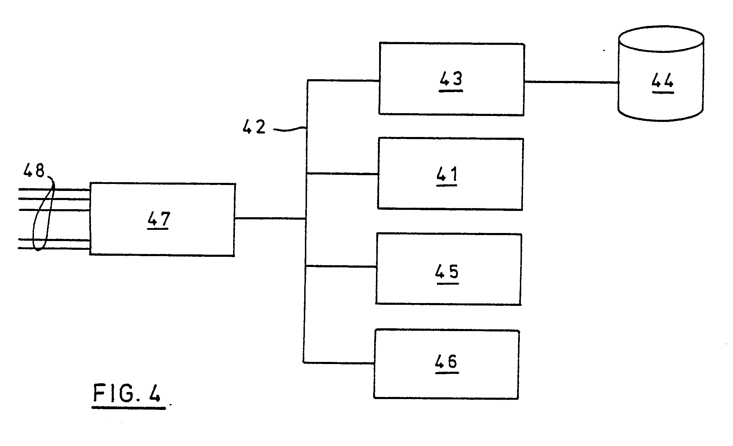

Fig. 4 shows the main components of a host processor unit. A processor 41 is connected through a common bus 42 to a working store 43 which has a large capacity disc store 44 as a back-up and main storage area. A control unit 45 and encryption device 46 are also connected to the bus 42 as is a packet switching interface 47. The packet switching interface is connected to a packet switching exchange through a teleprocessing line 48.

In all the figures the components are shown schematically and do not necessarily form the complete terminal, node or processor units. The components shown are only those required for an understanding of the operation of the preferred embodiment.

In operation the switching node (Fig. 3) maintains in its store 34 lists of the host cpu identities (HID) and the associated host identity key (HIDK). For each host cpu a record is maintained of the message sequence numbers (MSN) that has passed between that host cpu and the node so that sequential messages have sequential numbers.

For each transaction terminal connected directly to the switching node the node maintains lists of the terminal identity numbers (TID) the associated terminal identity keys (TIK) and for each terminal the number of the messages that have passed between the node and the terminal so that sequential messages have sequential numbers (terminal message sequence number (TMSN). The node also stores its own identity number (NID).

At each terminal there is stored in the RAM store 22, the terminal identity number TID, the terminal identity key (TIK) and the terminal message sequence number (TMSN), if the terminal is connected on a direct line to a node then there is no need to store the node ID. At each host computing centre there is stored in the disc store 44 a list of the identities of all the switching nodes of the network (NID's) and associated with each NID is the relevant host identity key (HIDK). The HIDK is preferably a different key for each switching node. Also associated with each NID is the message sequence number (MSN).

Initially the EFT network is designed from the switching nodes outwards and when the node network is in place then host cpu's and transaction terminals are added.

The network has a management centre at which the encryption keys for host cpu's and nodes are generated and a master list securely maintained. The encryption keys are encoded on a magnetic stripe and physically securely delivered to the relevant host cpu and node. Only when the keys are received can the host or node start to transmit encrypted data over the network.

When a host cpu is added to the network it receives from the network management centre as well as a network master encryption key, a host identity (HID) and a host identity key (HIDK) and message sequences number HMSN for each node of the network. The nodes of the network all receive the HID and their own associated HIDK and HMSN.

When a transaction terminal is added to the network it will be directly associated with a particular switching node as shown in Figure 1. The node and the terminal receive from the network management centre the terminal identity

4

(TID) a message sequence number TMSM and terminal identity key (TIK). In order to ensure maximum security the cards with the magnetic stripes bearing the TID and TIK are transported separately and read into the terminal at separate times. The control program of the terminal processor 20 stored in ROM 23 ensures that the TID and TIK are stored in the RAM 22.

In operation each particular transaction terminal has stored in its RAM 22, a TID, a TIK and the current MSN. Each message switching node has for each of the terminals connected to it a TID, a TIK and the current MSN, it also has for each host processor a HID, a HIDK, the current MSN and its node identity NID. Each host processor has its own HID and for each node of the network and NID, a HIDK and the current MSN.

When a user wishes to send sensitive data between one location of the network to another (terminal to host, or host to terminal or host to host) the sequence of operations is as in the following example of terminal to host.

A transaction is initiated at the transaction terminal by either the operator keying in information at the keyboard (29 Fig. 2) or inserting a magnetic stripe card in the card reader 28. In either case the control code in the ROM 23 recognises that sensitive data is to be transmitted. Data which is not considered sensitive such as the host processors HID is used to determine routing information sent in the clear.

The control program of the terminal then operates the processor 20 to logically combine the TID and MSN and using the encryption device 24 to encrypt the result using the TIK as the encryption key. The result of the encryption is called the terminal message key (TMK). The sensitive data (SD) when input is stored in the RAM 22.

The next step is for the control program to cause the processor 20 to perform an exclusive or (XOR) function on the TMK and the SD. The result of the XOR is a first coded message. The first coded message is then added to non-sensitive data in a message buffer of RAM 22 and the control program then establishes contact with the local switching node and using the line adapter 25 and modem 26 the complete message is sent to the switching node.

When a switching node receives a message from a local terminal through its modem 38 and line adapter 37 it is initially stored in a message buffer in the working store 33. The non-sensitive data such as TID and HID is examined and used as index numbers to obtain the related TIDK, MSN and HIDK, MSN from the disc store 34. The control program of the node then causes the processor to logically combine the TID and TMSN and encrypt the result using TIK as the key in the encryption device 36, the resultant TMK is stored in the working store within the device 36. Then HID and its MSN are logically combined and the result encrypted using HIDK as the key and the result host message key (HMK) stored in the working store in the encryption device 36.

The processor 31 then performs an XOR function on HMK and TMK and places the result in working main storage 33. Then processor 31 performs a second XOR function on the result of the first XOR and the first coded message. The result is a second coded message. This second coded message is then added to non-sensitive data (HID, NID, HMSN) in a message buffer and through the packet switching interface 39 sent to the host processor.

When a host processor receives a message from the packet switch network through its channel controller 47, the complete message is stored in a message buffer in the working store 43. The non-sensitive data (HID, NID) is used as index numbers to retrieve the related HIDK and MSN from the disc store 44. The control program 45 then causes the processor to logically combine the HID and MSN and using the encryption device 46 encrypt the result using HIDK as the key giving HMK. The processor then performs an XOR function on HMK and the second coded message and the result is the sensitive data that originated at the terminal. The data is then used for the particular transaction requested at the terminal. The above sequence of operations is followed when sensitive data is to be transmitted through the network.

The logical combinations steps at the terminal, switching node or host processor in the preferred embodiment is concatenation, however any logical function such as XOR would serve the purpose.

To ensure further security when any message is transmitted between terminal and node, or node and host it can be encrypted using TIK or TMK from or to the terminal, or the HIDK or HMK from or to the host all of which keys are held or deducible at the switching node and used there for deciphering and re-enciphering.

The MSN's held at each location is increased by a fixed amount each time a message is transmitted between the relevant locations thus providing a unique input to the origin and destination message keys used in the exclusive or functions. The increase in the MSN's may be carried out by stepping a counter by a predetermined amount and adding the value to the MSN or the increase value could be related to non-sensitive data always contained in a message and available at both the location and node at which the MSN's are held.

An advantage of the present invention is that sensitive data does not appear in the clear anywhere in the EFT network other than at the originating location and the receiving location and the encryption keys by using the MSN are different for every message passed between locations. This also means that the message keys are statistically indeterminate which adds further security to the system.

**Claims**

1. A data communication network in which binary coded data is transmitted between locations through a message routing node, characterised in that each sending location includes:

origin location processing means to generate an origin message key for each particular message initiated at that location, logic means to perform an exclusive OR operation on binary coded data to be transmitted and the origin message key and from the operation to generate a first coded message;

each message routing node includes:

node processing means to generate the origin message key and a destination message key unique to the particular message, logic means to perform, in such a way that the binary coded data do not appear in the clear, three-input exclusive OR operations on the origin message key, the destination message key and the first coded message to generate a second coded message for transmission to the receiving location;

the receiving location includes:

receiving location processing means to generate the destination message key and logic means to perform an exclusive OR function on the destination message key and the received second coded message to regenerate the original binary coded data.

2. A data communication network as claimed in claim 1 in which the origin message key and the destination message key for each message are statistically indeterminate.

3. A data communication network as claimed in claim 1 or claim 2 in which the origin location processing means includes a store, a control store and a processing unit and in which the store includes an origin location key and a message sequence number and the processing means includes means to logically combine the origin location key and the message sequence number and means to change the value of the message sequence number each time a message is sent from the origin location.

4. A data communication network as claimed in claim 1, claim 2 or claim 3 in which the receiving processing means includes a store and a processing unit and in which the store includes a destination location key and a message sequence number and the processing means includes means to logically combine the destination location key and the message sequence number and means to change the value of the message sequence number each time a message is received by the receiving location.

5. A data communication network as claimed in claim 4 in which the node processing means includes a store and a processing unit and in which the store includes lists of origin locations keys and destination location keys and their associated message sequence numbers and the processing means includes means to logically combine the location keys and its associated message sequence number the and means to change the value of the message sequence number each time a message is received from or sent to the associated location.

6. A data communication network as claimed in claim 5 in which each origin and receiving location and each message routing node includes an encryption device and in which the origin and destination location keys are formed by combining a location identity number with the message sequence number and encrypting the result using a location encryption key.

7. A data communication network as claimed in any one of the preceding claims in which the network is an electronic funds transfer network and the locations include transaction terminals and host data processing centres.

8. A method of transmitting binary coded data between locations through a message routing node including the steps of at each location for each message to be transmitted;

first generating an origin message key for the particular message; secondly performing an exclusive OR function on the origin message key and the binary coded data to produce a first coded message;

at each message routing node for each received message:

first generating the origin message key secondly generating a destination message key for the particular message; thirdly performing, in such a way that the binary coded data do not appear in the clear, a three-input exclusive OR function on the origin message key, the destination message key and the received first coded message and producing a second coded message for transmission to the receiving location;

at each receiving location: first generating the destination message key; secondly performing an exclusive OR function on the destination message key and the second coded message to regenerate the original binary coded data.

9. A method as claimed in claim 8 including the steps of storing at each location and each associated message routing node a location identity number, a location key and a message sequence number; combining the identity number, the location key and, for each message to be transmitted, the message sequence number to form the message key.

10. A method as claimed in claim 9 in which the step of combining includes logically combining the identity number and message sequence number and encrypting the result using the identity key as the encryption key.

11. A method as claimed in claim 10 in which the binary coded data includes sensitive data relating to an electronic funds transfer transaction.

**Patentansprüche**

1. Netzwerk zur Datenübermittlung, in dem die binär codierten Daten über einen Nachrichtenverteilungsknoten zwischen Stationen übertragen werden, dadurch gekennzeichnet, daß jede sendende Station verfügt über:

Quellstationsverarbeitungseinrichtungen, um einen Quellnachrichtenschlüssel für jede einzelne an der Station auf den Weg geschickte Nachricht zu erzeugen, Logikeinrichtungen, um eine Exclusiv-ODER-Operation auf die zu übertragenden binär codierten Daten und den Quellnachrichtenschlüssel auszuführen und um aus der Operation eine erste codierte Nachricht zu erzeugen, wobei jeder Nachrichtenverteilungsknoten verfügt über:

Knotenverarbeitungseinrichtungen, um den Quellnachrichtenschlüssel und einen für die einzelne Nachricht einzigartigen Zielnachrichtenschlüssel zu erzeugen, Logikeinrichtungen, um in einer solchen Weise mit drei Eingangsgrößen eine Exclusiv-ODER-Operation auf den Quellnachrichtenschlüssel, den Zielnachrichtenschlüssel und die erste codierte Nachricht auszuführen, daß die binär codierten Daten nicht im Klartext erscheinen, um eine zweite codierte Nachricht zur Übertragung zur Empfangsstation zu erzeugen, wobei die Empfangsstation verfügt über:

Empfangsstationsverarbeitungseinrichtungen, um den Zielnachrichtenschlüssel zu erzeugen, und Logikeinrichtungen, um eine Exclusiv-ODER-Funktion auf den Zielnachrichtenschlüssel und die empfangene zweite codierte Nachricht auszuführen, um die ursprünglichen binär codierten Daten zu regenerieren.

2. Netzwerk zur Datenübermittlung nach Anspruch 1, bei dem der Quellnachrichtenschlüssel und der Zielnachrichtenschlüssel für jede Nachricht statistisch unbestimmt sind.

3. Neztwerk zur Datenübermittlung nach Anspruch 1 oder Anspruch 2, bei dem die Quellstationsverarbeitungseinrichtung einen Speicher, einen Steuerspeicher und eine Prozessoreinheit aufweist und bei dem der Speicher einen Quellstationsschlüssel und eine Nachrichtenfolgenummer enthält, wobei die Prozessoreinheit über Einrichtungen zum logischen Verknüpfen des Quellstationsschlüssels und der Nachrichtenfolgenummer sowie über Einrichtungen verfügt, um den Wert der Nachrichtenfolgenummer jedesmal zu ändern, wenn eine Nachricht von der Quellstation abgeschickt wird.

4. Netzwerk zur Datenübermittling nach Anspruch 1, Anspruch 2 oder Anspruch 3, bei dem die Empfangsstationsverarbeitungseinrichtung über einen Speicher sowie eine Prozessoreinheit verfügt und bei dem der Speicher einen Zielstationsschlüssel sowie eine Nachrichtenfolgenummer enthält, wobei die Prozessoreinheit Einrichtungen zum Logischen Verknüpfen des Zielstationsschlüssels und der Nachrichtenfolgenummer sowie Einrichtungen aufweist, um den Wert der Nachrichtenfolgenummer jedesmal zu ändern, wenn eine Nachricht von der Empfangsstation empfangen wird.

5. Netzwerk zur Datenübermittlung nach Anspruch 4, bei dem die Knotenverarbeitungseinrichtung einen Speicher und eine Prozessoreinheit aufweist und bei dem der Speicher eine Liste von Quellstationsschlüsseln und Zielstationsschlüsseln mit ihren zugeordneten Nachrichtenfolgenummern enthält, wobei die Verarbeitungseinrichtung Einrichtungen zum logischen Verknüpfen der Stationsschlüssel und der zugeordneten Nachrichtenfolgeschlüssel sowie Einrichtungen enthält, um den Wert der Nachrichtenfolgenummer jedesmal zu ändern, wenn eine Nachricht von einer zugeordneten Station empfangen oder gesendet wird.

6. Netzwerk zur Datenübermittlung nach Anspruch 5, bei dem jede Quell- und Empfangsstation sowie jeder Nachrichtenverteilungsknoten ein Verschlüsselungsgerät enthält und bei dem die Quell- und Zielstationsschlüssel durch Kombinieren einer Stationsidentitätsnummer mit der Nachrichtenfolgenummer gebildet werden und das Ergebnis unter Verwendung eines Stationsverschlüsselungsschlüssels verschlüsselt wird.

7. Netzwerk zur Datenübermittlung nach einem der vorstehen Ansprüche, bei dem das Netzwerk ein Netzwerk zur elektronischen Geldüberweisung ist und die Stationen Geschäftskassenterminals und Zentraldatenprozessorzentren umfassen.

8. Verfahren zum Übermitteln von binär codierten Daten zwischen Stationen über einen Nachrichtenverteilungsknoten mit folgenden Schritten bei jeder Station für jede zu übertragende Nachricht: erstens, Erzeugen eines Quellnachrichtenschlüssels für die jeweilige Nachricht; zweitens, Ausführen einer Exclusiv-ODER-Funktion auf den Quellnachrichtenschlüssel und die binär codierten Daten, um eine erste codierte Nachricht zu erzeugen;

bei jedem Nachrichtenverteilungsknoten für jede empfangene Nachricht;

erstens, Erzeugen eines Quellnachrichtenschlüssels; zweitens, Erzeugen eines Zielnachrichtenschlüssels für die jeweilige Nachricht; drittens, Ausführen einer Exklusiv-ODER-Funktion mit drei Eingangsgrößen auf den Quellnachrichtenschlüssel, den Zielnachrichtenschlüssel und die erste empfangene codierte Nachricht in der Weise, daß die binär codierten Daten nicht im Klartext erscheinen, und Erzeugen einer zweiten codierten Nachricht für die Übermittlung zur Empfangsstation;

bei jeder Empfangsstation:

erstens Erzeugen des Zielnachrichtenschlüssels; zweitens, Ausführen einer Exklusiv-ODER-Funktion auf den Zielnachrichtenschlüssel und die zweite codierte Nachricht, um die ursprünglichen binär codierten Daten zu regenerieren.

9. Verfahren nach Anspruch 6 mit den Schritten des Speicherns einer Stationsidentitätsnummer, eines Stationsschlüssels und einer Nachrichtenfolgenummer in jeder Station und jedem zugeordneten Nachrichtenverteilungsknoten; Verknüpfen der Identitätsnummer, des Stationsschlüssels und der Nachrichtenfolgenummer für jede zu übertragende Nachricht, um einen Nachrichtenschlüssel zu bilden.

10. Verfahren nach Anspruch 9, bei dem der Schritt des Verknüpfens, das logische Verknüpfen der Identitätsnummer und der Nachrichtenfolgenummer sowie das Verschlüsseln des Ergebnisses umfaßt, wobei der Identitätsschlüssel als Verschlüsselungsschlüssel verwendet wird.

11. Verfahren nach Anspruch 10, bei dem die binär codierten Daten sicherheitsempfindliche Daten bezüglich einer elektronischen Geldüberweisung sind.

**Revendications**

1. Réseau de communication de données dans lequel des données codées binaires sont transmises entre des endroits différents par l'intermédiaire d'un noeud d'acheminement de message, caractérisé en ce que chaque endroit d'émission comprend: des moyens de traitement d'endroit d'origine pour générer une clé de message d'origine pour chaque message particulier établi à cet endroit, des moyens logiques pour effectuer une opération OU exclusif sur les données codées binaires à transmettre et sur la clé de message d'origine et pour générer à partir de l'opération un premier message codé; chaque noeud d'acheminement de message comprend: des moyens de traitement de noeud pour générer la clé de message d'origine et une clé de message de destination spécifique pour le message particulier, des moyens logiques pour effectuer, d'une façon telle que les données codées binaires n'apparaissent pas en clair, des opérations OU exclusif à trois entrées sur la clé de message d'origine, la clé de message de destination et le premier message codé, de manière à engendrer un deuxième message codé pour transmission à l'endroit de réception; l'endroit de réception comprend: des moyens de traitement d'endroit de réception pour générer la clé de message de destination, et des moyens logiques pour effectuer une fonction OU exclusif sur la clé de message de destination et le deuxième message codé reçu, de manière à recréer les données codées binaires d'origine.

2. Réseau de communication de données suivant la revendication 1, dans lequel la clé de message d'origine et la clé de message de destination pour chaque message sont statiquement indéterminées.

3. Réseau de communication de données suivant la revendication 1 ou la revendication 2, dans lequel les moyens de traitement d'endroit d'origine comprennent une mémoire, une mémoire de commande et une unité de traitement et dans lequel la mémoire contient une clé d'endroit d'origine et un numéro de séquence de message, et les moyens de traitement comprennent des moyens de combinaison logique de la clé d'endroit et du numéro de séquence de message et des moyens de changement de la valeur du numéro de séquence de message chaque fois qu'un message est transmis à partir de l'endroit d'origine.

4. Réseau de communication de données suivant la revendication 1, la revendication 2 ou la revendication 3, dans lequel les moyens de traitement de réception comprennent une mémoire et une unité de traitement, et dans lequel la mémoire contient une clé d'endroit de destination et un numéro de séquence de message et les moyens de traitement comprennent des moyens de combinaison logique de la clé d'endroit de destination et du numéro de séquence de message et des moyens de changement de la valeur du numéro de séquence de message chaque fois qu'un message est reçu par l'endroit de réception.

5. Réseau de communication de données suivant la revendication 4, dans lequel les moyens de traitement de noeud comprennent une mémoire et une unité de traitement, et dans lequel la mémoire contient des listes de clés d'emplacement d'origine et de clés d'emplacement de destination et leurs numéros de séquence de message associés, et les moyens de traitement comprennent des moyens de combinaison logique des clés d'endroit et de leur numéro de séquence de message associé et des moyens de changement de la valeur du numéro de séquence de message chaque fois qu'un message est reçu en provenance ou est envoyé vers l'endroit associé.

6. Réseau de communication de données suivant la revendication 5, dans lequel chaque endroit d'origine et de réception et chaque noeud d'acheminement de message comportent un dispositif de codage, et dans lequel les clés d'endroit d'origine et de destination sont formées par combinaison d'un numéro d'identité d'endroit avec le numéro de séquence de message et par codage du résultat au moyen d'une clé de codage d'endroit.

7. Réseau de communication de données suivant l'une quelconque des revendications précédentes, dans lequel le réseau est un réseau de transfert électronique de fonds et les endroits comprennent des terminaux de transaction et des centres principaux ou hôtes de traitement de données.

8. Procédé de transmission de données codées binaires entre des endroits différents par l'intermédiaire d'un noeud d'acheminement de message, comprenant les opérations suivantes à chaque endroit pour chaque message à transmettre: d'abord la génération d'une clé de message d'origine pour le message particulier, et ensuite l'exécution d'une fonction OU exclusif sur la clé de message d'origine et sur les données codées binaires, de manière à produire un premier message codé; à chaque noeud d'acheminement de message pour chaque message reçu: premièrement la génération de la clé de message d'origine, deuxièmement la génération d'une clé de message de destination pour le message particulier, troisièmement l'exécution, d'une manière telle que les données codées binaires n'apparaissent pas en clair, d'une fonction OU exclusif sur la clé de message d'origine, la clé de message de destination et le premier message codé reçu, de manière à produire un deuxième message codé pour transmission à l'endroit de réception; à chaque endroit de réception: premièrement la génération de la clé de message de destination et deuxièmement l'exécution d'une fonction OU exclusif sur la clé de message de destination et sur le deuxième message codé, de manière à recréer les données codées binaires d'origine.

9. Procédé suivant la revendication 8, comprenant les opérations de stockage, à chaque endroit et à chaque noeud associé d'acheminement de message, d'un numéro d'identité d'endroit, d'une clé d'endroit et d'un numéro de séquence de message; et de combinaison du numéro d'identité, de la clé d'endroit et, pour chaque message à transmettre, du numéro de séquence de message, pour former la clé de message.

10. Procédé suivant la revendication 9, dans lequel l'opération de combinaison comprend la combinaison logique du numéro d'identité et du numéro de séquence de message et le codage du résultat en utilisant la clé d'identité comme clé de codage.

11. Procédé suivant la revendication 10, dans lequel les données codées binaires comprennent des données confidentielles relatives à une transaction de transfert électronique de fonds.

FIG. 1

FIG. 2

FIG. 3

FIG. 4